# EUROPEAN PATENT APPLICATION

(11) **EP 4 611 142 A1**
(43) Date of publication of application: **03.09.2025**
(21) Application number: 24220363.6
(22) Date of filing: 16.12.2024
(51) Int. Cl.: H01M 50/213, H01M 50/291, H01M 10/658, H01M 50/293

(54) **BATTERY PACK**

(30) Priority: 29.02.2024 KR 20240029999
(71) Applicant: Samsung SDI Co., Ltd., Gyeonggi-do 17084 (KR)
(72) Inventor: Park, Sanghun, Yongin-si, Gyeonggi-do 17084 (KR)
(74) Representative: Gulde & Partner

(57) **Abstract**

A battery pack (10) includes a housing (100) and battery modules (30, 300) in the housing. Each of the battery modules includes battery cells, a case (310) accommodating the battery cells, a first fire prevention sheet (360) on the case, and a first spacer (370) on the case and configured to separate the first fire prevention sheet from an upper surface of the case.

## Description

### BACKGROUND

### 1. Field

One or more embodiments relate to a battery pack.

### 2. Description of the Related Art

Secondary batteries are batteries designed to be repeatedly charged and discharged and may be used as an energy source for mobile devices, electric vehicles, hybrid vehicles, electric bicycles, and uninterruptible power supplies. Depending on the type of external devices in which the secondary batteries are utilized, the secondary batteries may be utilized in the form of a single battery cell or may be utilized in the form of a module or pack in which multiple battery cells are connected to each other and bundled into a single unit.

The information disclosed in the background technology of the disclosure is only to help better understanding of the background of the disclosure, and therefore may include information that does not constitute the related art.

### SUMMARY

One or more embodiments include a battery pack in which a flame may be quickly extinguished and the spread of a flame may be prevented (or at least mitigated) in response to a flame occurring in a battery module.

However, the technical objective to be solved by the present disclosure is not limited to the ones described above, and other objectives not mentioned herein may be clearly understood by those skilled in the art from the description of the disclosure described below.

Additional aspects will be set forth in part in the description which follows and, in part, will be apparent from the description, or may be learned by practice of the presented embodiments of the present disclosure.

According to one or more embodiments, a battery pack includes a housing and battery modules in the housing. Each of the battery modules includes battery cells, a case accommodating the battery cells, a first fire prevention sheet on the case, and a first spacer on the case configured to separate the first fire prevention sheet from an upper surface of the case.

The first fire prevention sheet may include two or more first fire prevention sheets, the battery modules may further include a second spacer configured to connect first fire prevention sheets to each other and to space the first fire prevention sheets apart from each other.

The first fire prevention sheets may correspond to the battery modules.

The second spacer may include a flame-retardant material, and both ends of the second spacer in a longitudinal direction may be inward relative to both ends of the first fire prevention sheet.

The first spacer may include two or more first spacers, and the first spacers may be along an edge of the case.

The first spacers may be adjacent to an edge of the case and spaced apart inward from the edge of the case.

The first spacer may include a flame-retardant material including two or more stacked layers, and an upper surface of the first spacer may be in contact with a bottom surface of the first fire prevention sheet.

The case may include a first case and a second case which is connected to the first case and the battery cells may be accommodated in the first case and the second case.

The battery pack may further include a substrate on the battery modules and electrically connected to the battery modules.

The protrusion may include two or more first upper protrusions on the upper surface of the second case, and two or more second upper protrusions on the upper surface of the second case spaced apart from the first upper protrusions.

The battery modules may each further include a first film covering a bottom surface of the first case and a second film covering an upper surface of the second case.

The second film may be spaced apart from a bottom surface of the housing.

The first fire prevention sheet may include a flame-retardant material or a fire extinguishing agent, and may cover three sides of an upper portion of the case.

The first fire prevention sheet may include a first body portion covering the upper surface of the case, and two first edge portions extending downward from two long side portions of the first body portion.

A lower end of the first edge portion may be above a center of the case in a height direction and below an upper end of the case.

The case may include a case protrusion protruding downward from a bottom surface of the case, and the housing may have a bottom surface spaced apart from the bottom surface of the case by the case protrusion.

The housing may include a housing protrusion on the bottom surface of the housing, and the housing protrusion may extend into the case protrusion or the case protrusion may extend into the housing protrusion.

The battery modules may further include a second fire prevention sheet on the bottom surface of the housing and covering all bottom surfaces of the battery modules.

The second fire prevention sheet may include a flame-retardant material or a fire extinguishing agent, and the second fire prevention sheet may wrap three sides of a lower portion of the case.

The second fire prevention sheet may include a second body portion covering a bottom surface of the case, and two second edge portions extending upward from two long side portions of the second body portion.

### BRIEF DESCRIPTION OF THE DRAWINGS

The above and other aspects, features, and advantages of certain embodiments of the present disclosure will be more apparent from the following description taken in conjunction with the accompanying drawings, in which:

The following drawings attached to this specification illustrate embodiments of the present disclosure, and serve to help understand the technical idea of the present disclosure along with the description of the present disclosure described later. The disclosure is not to be construed as limited to the matters described in the drawings.
FIG. 1 illustrates a perspective view of a battery pack;
FIG. 2 illustrates a rear surface of the battery pack;
FIG. 3 illustrates a perspective view of a battery module and a substrate;
FIG. 4 illustrates a top view of the battery module and the substrate;
FIG. 5 illustrates an exploded perspective view of the battery module;
FIG. 6 illustrates a top view of the battery module;
FIG. 7 illustrates a first fire prevention sheet and a first spacer; and
FIGS. 8 and 9 illustrates cross-sections of the battery pack.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Some embodiments of the present disclosure and methods according thereto may be understood by referring to the detailed descriptions and drawings of the embodiments. The described embodiments may have various modifications and be implemented in different forms, and are not limited to the embodiments described herein. Additionally, some or all of the features of various embodiments of the present disclosure may be combined with each other. Each embodiment may be implemented independently or in relation to each other. The described embodiments are provided as examples to ensure that the present disclosure is thorough and complete, and are also intended to completely convey the present disclosure to those skilled in the art to which the present disclosure pertains. This disclosure is subject to all modifications, equivalents, and substitutions within the technical scope of the present disclosure. Accordingly, processes, elements, and techniques that are not necessary to those skilled in the art for a complete understanding of the embodiments of the present disclosure may not be described.

Unless otherwise noted throughout the accompanying drawings and specification, the same reference numerals, characters, or combinations thereof indicate the same components, and thus redundant descriptions will be omitted. Additionally, in order to clearly explain the present disclosure, parts not related to the description or parts unrelated to the description have been omitted.

The relative sizes of elements, layers, and regions in the drawings may be exaggerated for clarity. The use of hatching and/or shading in the accompanying drawings generally serves to clarify boundaries between adjacent elements. Accordingly, the presence or absence of hatching or shading does not indicate a preferred form or requirement for a particular material, material properties, dimensions, proportions, commonality between figure elements, and/or any other characteristic, property, attribute, etc. of the element unless specified.

Various embodiments are described herein with reference to cross-sectional examples that are schematic illustrations of embodiments and/or intermediate structures. The appearance of the drawing may therefore vary, for example as a result of manufacturing techniques and/or tolerances. In addition, the specific structural or functional description disclosed in this specification is merely an example for explaining embodiments according to the concept of the present disclosure. Accordingly, the embodiments disclosed in this specification should not be construed as being limited to the shape of the illustrated areas and include, for example, variations in shape due to manufacturing.

The areas illustrated in the drawings are schematic in nature and their shapes are not intended to be limiting or illustrative of the actual shape of the device areas. Additionally, as those skilled in the art will recognize, the described embodiments may be modified in various ways without departing from the scope of the present disclosure.

Numerous specific details are set forth in the specification to provide a thorough understanding of the various embodiments. However, various embodiments may be practiced without or including one or more of these specific details. In other instances, well-known structures and devices are illustrated in block diagram form to avoid unnecessarily obscuring the various embodiments.

For ease of explanation herein, to describe the relationship of one element or feature to another as illustrated in the drawings, spatially relative terms such as "below", "above", "lower", "upper", "downward", "inward" etc. may be used. Spatially relative terms may be basically defined as disclosed in the accompanied drawings, but not limited thereto.

In addition, the expression "viewed from a plane" refers to a view of an object from above, and the expression "in a schematic cross-sectional view" refers to a schematic cross-section taken by cutting the object vertically. The term "viewed from the side" indicates that a first object may be above, below or to the side of a second object and vice versa. Additionally, the term may include layers, lamination, surface, extension, covering, or partially covering, or any other suitable term that would be understood and understood by those skilled in the art. The expression "does not overlap" may include meanings such as "being distant from" or "spaced apart from" and any other suitable equivalents recognized and understood by those skilled in the art. The terms "side" and "surface" may indicate that a first object may directly or indirectly face a second object. If there is a third object between the first object and the second object, the first object and the second object face each other, but may be understood as indirectly opposing each other.

If an element, layer, region or component is referred to as being "formed", "connected" or "coupled" on or to another element, the element, layer, region or component may be formed directly on the element, layer, region or component, or may be formed on another element, layer, region or component, or indirectly formed on, connected to, or coupled to other components. The above expression may also collectively refer to direct or indirect combinations or connections of elements, layers, regions or components and integral or non-integral combinations or connections so that one or more elements, layers, regions or components can exist. For example, if an element, layer, region or component is referred to as being "electrically connected" or "electrically coupled" to another element, layer, region or component, this may indicate that the element, layer, region or component is directly electrically connected or coupled thereto, or other elements, layers, regions or components may be present. However, "directly connected" or "directly coupled" indicates that one component is directly connected or coupled to another component without an intermediate component, or is on another component. In addition, in this specification, if a portion of a layer, film, region, plate, etc. is formed on another part, the formation direction thereof is not limited to an upper direction, and includes the portion being formed on the side or on the bottom. Conversely, if a portion of a layer, film, region, plate, etc. is formed "under" another part, not only is that portion "immediately below" the other part, but also there may be another part between the part and the other part. Other expressions that describe relationships between components, such as "between," "immediately between," "adjacent to," and "immediately adjacent to," may be interpreted similarly. Additionally, if an element or layer is referred to as being "between" two elements or layers, the element or the layer may be the only element between the two elements or layers, or there may be other elements therebetween.

For the purposes of this specification, expressions such as "at least one or more" or "any one" do not limit the order of individual elements. For example, "at least one of X, Y and Z", "at least one of X, Y or Z", "at least one selected from the group consisting of X, Y, and Z" may include any combination of two or more of X, Y and Z. Similarly, expressions such as "at least one of A and B" and "at least one of A or B" may include A, B or A and B. As used herein, the term "or" generally refers to "and/or" and "and/or" includes any combination of one or more related list items. For example, an expression such as "A and/or B" may include A, B, or A and B.

Although the terms "first", "second", "third", etc. may be used herein to describe various elements, components, regions, layers and/or sections, such elements, components, regions, layers and/or sections are not limited by these terms. These terms are used to distinguish one element, component, region, layer or section from another element, component, region, layer or section. Accordingly, a first element, component, region, layer or section described below may be referred to as a second element, component, region, layer or section without departing from the scope of the present disclosure. Describing an element as a "first" element may not require or imply the presence of a second or another element. Terms such as "first," "second," etc. may be used herein to distinguish different categories or sets of elements. For clarity, terms such as "first," "second," etc. may refer to "first category (or first set)," "second category (or second set)," etc., respectively.

The terms used in this application are only used to describe certain embodiments and are not intended to limit the present disclosure. As used herein, singular terms are intended to include plural terms and plural terms are also intended to include the singular, unless the context clearly dictates otherwise. The terms "include," "comprise," and "have" if used herein are meant to designate the presence of specified features, integers, or steps. These expressions do not exclude the presence or addition of one or more other functions, steps, operations, components and/or groups thereof.

If one or more embodiments may be implemented differently, certain process sequences may be performed differently than the described order. For example, two processes described in succession may be performed substantially simultaneously or may be performed in an order opposite to that described.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless defined differently, all terms used in the description including technical and scientific terms have the same meaning as generally understood by those skilled in the art to which the present disclosure pertains. Terms as defined in a commonly used dictionary should be construed as having the same meaning as in an associated technical context and/or the context of the present specification, and unless defined apparently herein, the terms are not ideally or excessively construed as having formal meaning.

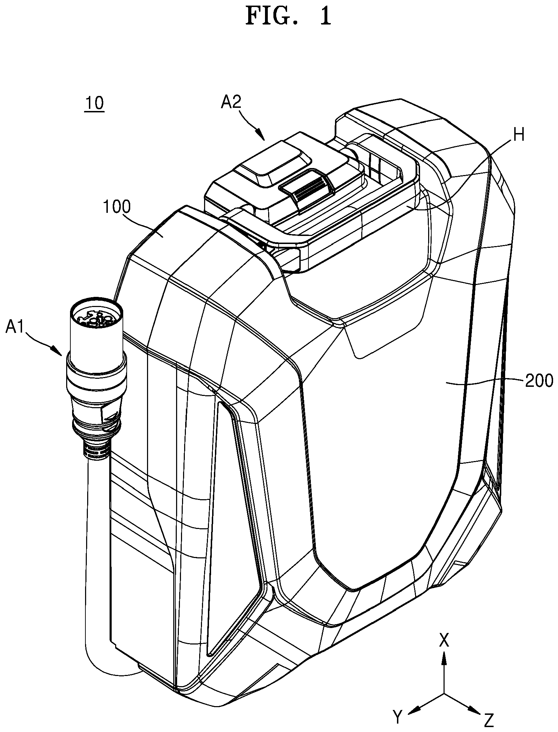

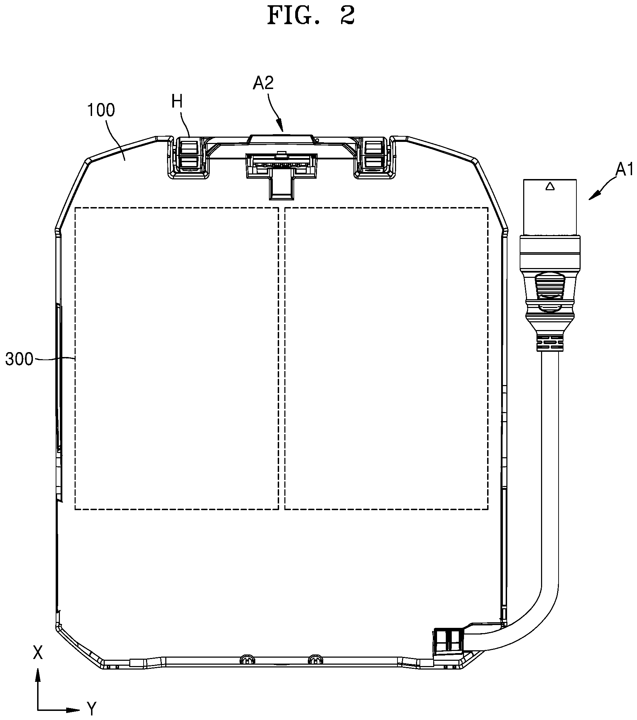

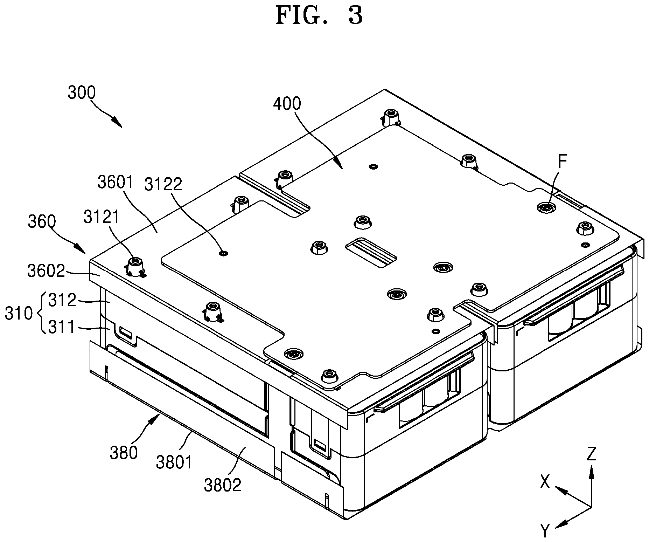

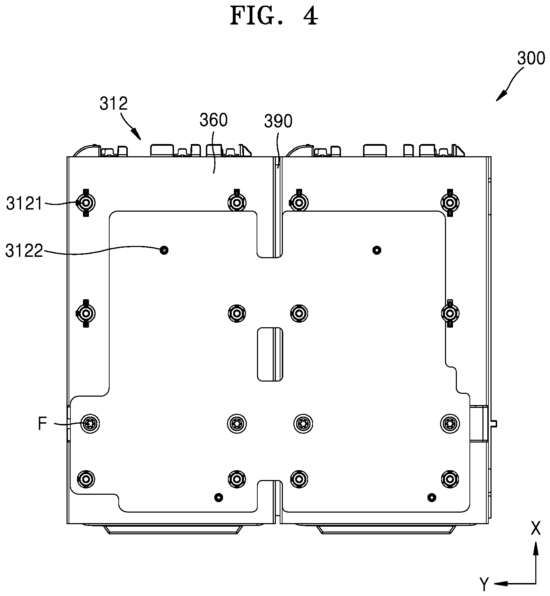

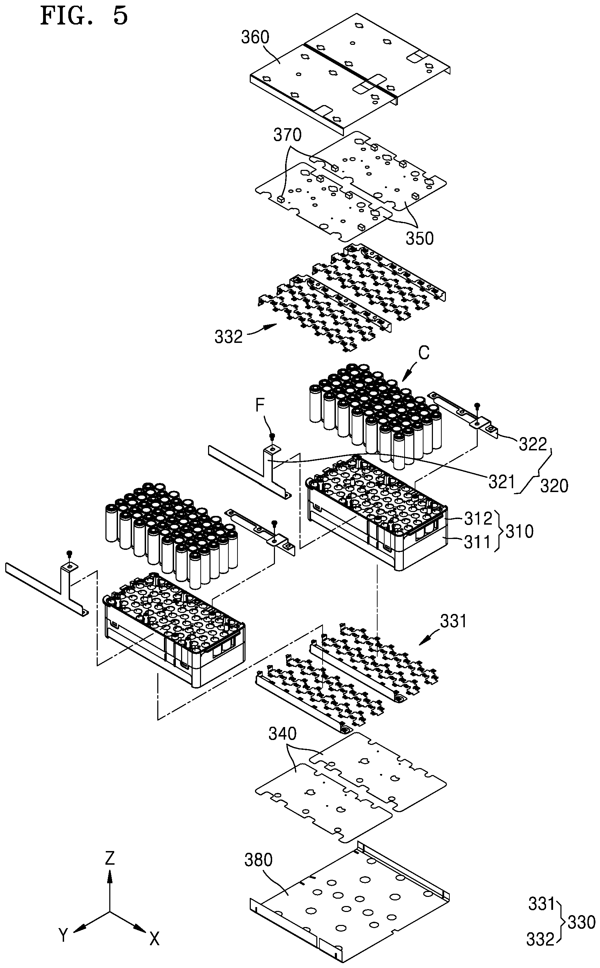

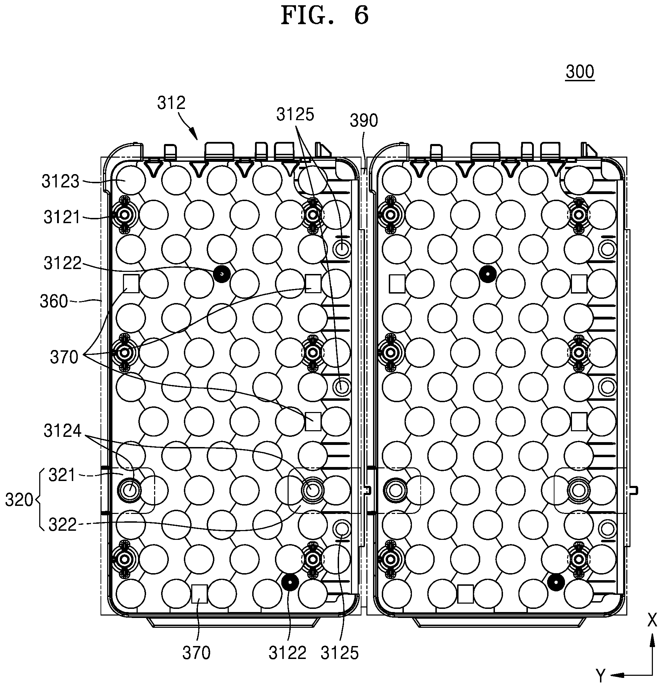

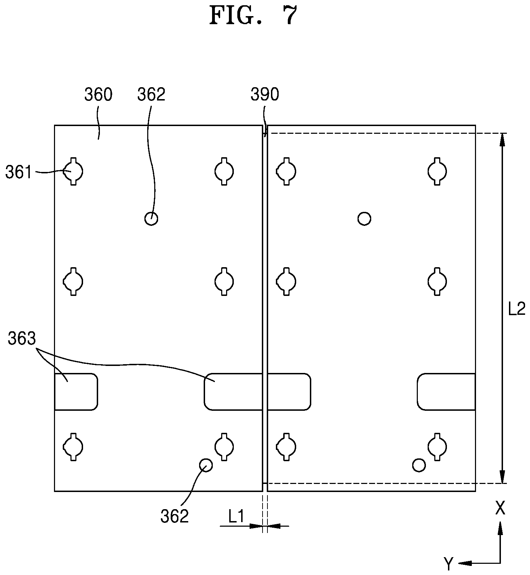

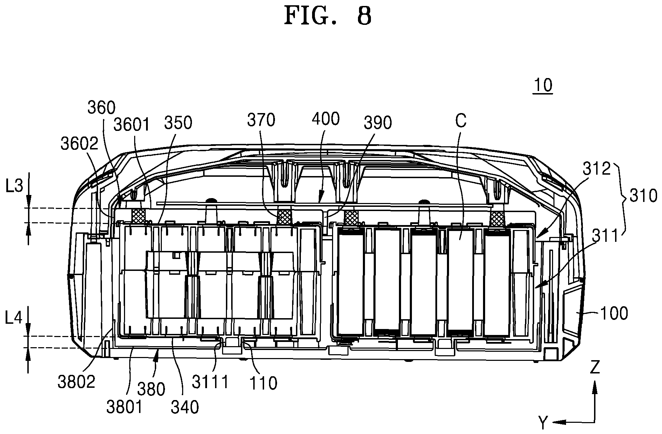

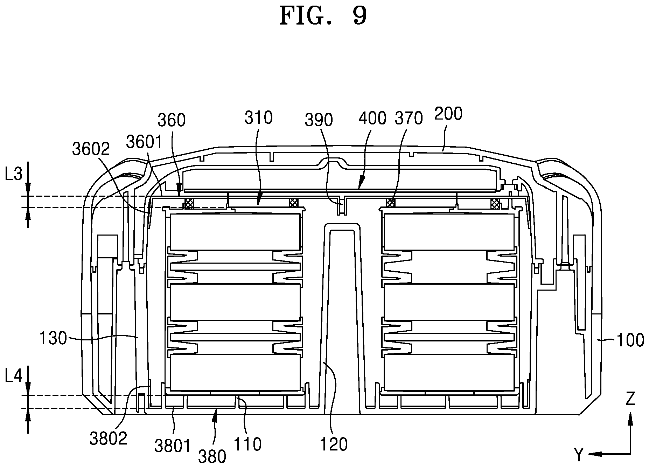

FIG. 1 illustrates a perspective view of a battery pack 10, FIG. 2 illustrates a rear surface of the battery pack 10, FIG. 3 illustrates a perspective view of a battery module 300 and a substrate 400, FIG. 4 illustrates the battery module 300 and the substrate 400, FIG. 5 illustrates an exploded perspective view of the battery module 300, FIG. 6 illustrates a top view of the battery module 300, FIG. 7 illustrates a first fire prevention sheet 360 and a first spacer 370, and FIGS. 8 and 9 illustrate a cross-section of the battery pack 10. For example, FIGS. 8 and 9 illustrate cross-sections parallel to a YZ plane, and for convenience of description, the battery module 300 on the left in FIG. 8 represents a state without a battery cell C, and the battery module 300 on the right of FIG. 8 illustrates a state including a battery cell C. FIG. 9 illustrates a cross-section of the battery pack 10 in which the battery modules 300 are arranged in a different direction from that of FIG. 8.

The battery pack 10 may be applied to large applications such as an energy storage system (ESS) or electric vehicles, or small to medium-sized applications such as power tools or smartphones. For example, the battery pack 10 may be coupled to other devices. In one or more embodiments, the battery pack 10 may supply power to an external device through a first adapter A1. The battery pack 10 may be physically connected to an external device through a second adapter A2. The external device may be a power tool such as a chain saw, drill, lawn mower, etc.

The battery pack 10 may be configured to be worn or carried by a user. In one or more embodiments, the battery pack 10 may be a backpack that a user can wear. A connection member such as a string, buckle, or belt may be attached to the battery pack 10 (e.g., the back surface of the battery pack 10). A user may carry the battery pack 10 by connecting the connection member to the body, such as the shoulder, waist, or the like, and connect the battery pack 10 to an external device, such as a power tool, to supply power to the external device. The battery pack 10 may include a handle H so that the user can carry the battery pack 10. In FIG. 1, the handle H on an upper portion of the housing 100 is illustrated, but one or more handles H may be on a front surface of the housing 100 (e.g., a side facing a Z-axis direction of FIG. 1), a rear surface, a side surface, and/or a bottom surface of the housing 100.

The battery pack 10 may include the housing 100 and a plurality of battery modules 300 included in the housing 100, and each battery module 300 may include a plurality of battery cells C, a case 310 including the plurality of battery cells C, a first fire prevention sheet 360 on the case 310, and a first spacer 370 which is on the case 310 and separates the first fire prevention sheet 360 from an upper surface of the case 310.

The battery pack 10 may include the housing 100, a cover 200, the battery module 300, and the substrate 400.

The housing 100 may hold and/or support other components of the battery pack 10 (e.g., the cover 200, the battery module 300, and the substrate 400). The housing 100 may be at the rear of the battery pack 10 and may be hollow. The battery module 300 may be inside the housing 100. The housing 100 may be hollow and have an open upper surface. The open upper surface of the housing 100 may be covered by the cover 200. However, the shape of the housing 100 is not limited thereto and may vary depending on the shape of the battery pack 10 and/or the size and capacity of the battery module 300, etc.

The housing 100 may include a housing protrusion 110 (see FIGS. 8 and 9). One or more housing protrusions 110 may be formed on the bottom surface of the housing 100 (for example, a surface facing the battery module 300) and may be connected to the battery module 300. In one or more embodiments, as illustrated in FIG. 8, a case protrusion 3111 of the case 310 (e.g., a first case 311) of the battery module 300 may be inserted into the housing protrusion 110, and the battery module 300 may be fixed to the housing 100. In one or more embodiments, the housing protrusion 110 may have a hollow cylindrical shape, and the case protrusion 3111 may be inserted into the housing protrusion 110. The housing protrusion 110 may separate the battery module 300 (e.g., the first case 311) from the bottom surface of the housing 100. Accordingly, if the battery cell C ignites, gas generated from the battery cell C may be discharged easily. In one or more embodiments, as illustrated in FIG. 8, the bottom surface of the housing 100 and a bottom surface of the first case 311 (or a bottom surface of the first film 340) may be spaced apart from each other by a gap having a distance L4, and thus, gas generated in a lower portion of the battery cell C (e.g., a bottom electrode) may be easily discharged via the gap having the distance L4. Thus, an excessive increase in the internal pressure of the battery module 300 due to gas generated from a fire occurring in the battery cell C may be prevented or at least mitigated. In FIG. 8, two housing protrusions 110 respectively corresponding to two battery modules 300, but the number of housing protrusions 110 is not limited to two. In one or more embodiments, the housing 100 may include a plurality of housing protrusions 110 corresponding in number to a plurality of battery modules 300, and the number of housing protrusions 110 may vary according to the size, arrangement, and shape of the battery modules 300.

In one or more embodiments, the housing protrusion 110 may not be directly fastened to the battery module 300 but may only separate the battery module 300 apart from the housing 100. In the embodiment illustrated in FIG. 9, the housing protrusion 110 may have a pin or thin plate shape protruding from the bottom surface of the housing 100. An upper end of the housing protrusion 110 may contact the bottom surface of the case 310 so that the bottom surface of the case 310 is spaced apart from the bottom surface of the housing 100.

The housing 100 may include a first partition wall 120. The first partition wall 120 may protrude from the bottom surface of the housing 100 in a height direction (e.g., the Z-axis direction in FIG. 9) and separate adjacent battery modules 300 apart from each other in a width direction of the housing 100 (e.g., a Y-axis direction in FIG. 9). In the embodiment illustrated in FIG. 9, the first partition wall 120 may be at a center (or substantially a center) in the width direction of the housing 100. The first partition wall 120 may divide the internal space of the housing 100 into spaces where each battery module 300 is accommodated, and the first partition wall 120 may be spaced apart from an inner side surface of the battery module 300 to allow gas generated from the battery cell C to be easily discharged.

The housing 100 may include a second partition wall 130. The second partition wall 130 may divide an internal space of the housing 100 including the battery module 300 and may be connected to the cover 200. In the embodiment illustrated in FIG. 9, the battery module 300 may be in partitioned spaces between the first partition wall 120 and the second partition wall 130. The second partition wall 130 may be spaced apart from an outer side surface of the battery module 300. Accordingly, gas generated from the battery cell C may be easily discharged.

The cover 200 may be connected to the housing 100. In the embodiment illustrated in FIG. 1, the cover 200 may cover the open upper surface of the housing 100 and the battery module 300 and the substrate 400 may be accommodated in the housing 100. The cover 200 may be hollow and have an open bottom surface corresponding to an upper surface of the housing 100. The cover 200 may be attachable/detachable to/from the housing 100.

One or more battery modules 300 may be included in the battery pack 10. The battery module 300 may include a plurality of battery cells C and may supply power to an external device through the first adapter A1. In the embodiment illustrated in FIG. 2, two battery modules 300 may be included in the battery pack 10. The two battery modules 300 may be spaced apart from each other and may not contact each other. However, the number of battery modules 300 is not limited to two, and any other suitable number of battery modules 300 may be included depending, for example, on the specifications and application of the battery pack 10. The battery cells C included in the battery module 300 may be at least one of a cylindrical shape, a prismatic shape, and/or a pouch shape. Hereinafter, for convenience of description, the description will focus on an embodiment in which the battery cell C is cylindrical.

The battery module 300 may include the case 310, a bus bar 320, a cell tab 330, the first film 340, the second film 350, the first fire prevention sheet 360, the first spacer 370, the second fire prevention sheet 380, and a second spacer 390.

The case 310 is configured to hold and support the battery cell C and allow the battery module 300 to be supported in the housing 100. In one or more embodiments, the case 310 may be hollow and have a substantially rectangular parallelepiped shape. A lower portion of the case 310 may face the bottom surface of the housing 100, and the lower portion and an upper portion of the case 310 may be wrapped by the first film 340 and the second film 350, respectively. Additionally, the upper portion and the lower portion of the case 310 may be wrapped by the first fire prevention sheet 360 and the second fire prevention sheet 380, respectively. The substrate 400 may be on the case 310.

The case 310 may be arranged such that electrodes of the battery cells C face the bottom surface of the housing 100 and the substrate 400. In the embodiment illustrated in FIG. 8, the case 310 may be arranged such that an upper end and a lower end of the battery cells C face a bottom surface of the substrate 400 and the bottom surface of the housing 100, respectively. Accordingly, in response to one of the battery cells C igniting, gas generated from the electrodes of the battery cells C may be easily discharged through the gap having the distance L4 between the bottom surface of the housing 100 and and the first film 340 and gap having the distance L3 between the substrate 400 and the second film 350, thereby preventing (or at least mitigating) an excessive pressure increase in the battery module 300 and additional damage to the battery module 300 and the battery pack 10.

The case 310 may be arranged such that the electrodes of the battery cells C face a side surface of the housing 100. In the embodiment illustrated in FIG. 9, the case 310 may be arranged such that the upper end and the lower end thereof corresponding to the electrodes of the battery cells C face the inner side surface of the housing 100. An inner side surface of the case 310 may be spaced apart from the first partition wall 120, and an outer side surface of the case 310 may be spaced apart from the second partition wall 130. Accordingly, in response to one of the battery cells C igniting, gas generated from the electrodes of the battery cells C may be easily discharged through a distance (e.g., a gap) between a side surface of the case 310 and the first partition wall 120 and the second partition wall 130, thereby preventing (or at least mitigating) spreading of a flame and thereby reducing additional damage to the battery module 300 and battery pack 10.

The case 310 may include the first case 311 and the second case 312.

The first case 311 may be in a lower portion of the case 310 and may be a portion directly connected to or in contact with the bottom surface of the housing 100. For example, the first case 311 and the second case 312 may include a plurality of battery cells C therein. The first film 340 may be attached to the bottom surface of the first case 311 for insulation.

The first case 311 may include the lower protrusion 3111. In the embodiment illustrated in FIG. 8, one or more lower protrusions 3111 may be on the bottom surface of the first case 311 and may protrude toward the bottom surface of the housing 100. At least a portion of the lower protrusion 3111 may extend into the housing protrusion 110 of the housing 100, or the housing protrusion 110 may extend into the lower protrusion 3111, thereby fixing (e.g., coupling) the first case 311 to the housing 100. The first case 311 may be spaced apart from the bottom surface of the housing 100 by a gap having the distance L4 due to the lower protrusion 3111 and the housing protrusion 110, and thus, gas generated from the bottom surface of the battery cell C may be easily discharged.

The second case 312 may be in the upper portion of the case 310 and may include a plurality of battery cells C inside the second case 312 and the first case 311. The second case 312 may be attachable/detachable to/from the first case 311 (e.g., the second case 312 may be detachably coupled to the first case 311). The second film 350 may be attached to an upper surface of the second case 312 for insulation.

The second case 312 may include a plurality of protrusions. In one or more embodiments, the second case 312 may include a plurality of first upper protrusions 3121 and a plurality of second upper protrusions 3122 on an upper surface thereof. The plurality of protrusions may separate the substrate 400 apart from the upper surface of the second case 312. Additionally, the second case 312 may include an insertion hole 3123, a first fastening hole 3124, and a second fastening hole 3125.

One or more first upper protrusions 3121 may be on the second case 312. In the embodiment illustrated in FIGS. 4 and 6, a plurality of first upper protrusions 3121 may be on the upper surface of the second case 312. The first upper protrusion 3121 may pass through the second film 350 and extend into a first sheet hole 361 of the first fire prevention sheet 360. The first upper protrusion 3121 may extend into the first sheet hole 361 to fix the second film 350 and the first fire prevention sheet 360 on the second case 312. In one or more embodiments, the first upper protrusion 3121 may include a cylinder or a truncated cone shape tapered in an upward direction. One or more ribs may be on an outer peripheral surface of the first upper protrusion 3121, and the first sheet hole 361 may include the ribs and have a shape corresponding to the first upper protrusion 3121. The ribs may extend into the first sheet hole 361 such that the first fire prevention sheet 360 may be firmly supported in the second case 312.

The plurality of first upper protrusions 3121 may be along a long side portion of the second case 312. In the embodiment illustrated in FIG. 6, three first upper protrusions 3121 may be on each long side portion of the second case 312 (i.e., a total of six protrusions on the second case 312). However, the number of first upper protrusions 3121 is not limited to six, and the number of first upper protrusions 3121 may vary depending, for example, on the size and shape of the second case 312, the second film 350, and the first fire prevention sheet 360. At least some of the plurality of first upper protrusions 3121 may be connected to the substrate 400. In the embodiment illustrated in FIG. 3, at least some of the plurality of first upper protrusions 3121 on an inner long side portion among a pair of long side portions of the second case 312 and at least some of the plurality of first upper protrusions 3121 on an outer long side portion among the pair of long side portions of the second case 312 may extend into the substrate 400. Thus, the substrate 400 and the second case 312 may be firmly connected to each other. Due to the first upper protrusion 3121, the substrate 400 is separated or spaced apart from the first fire prevention sheet 360, thereby minimizing (or at least reducing) heat transferred to the substrate 400 in response to a fire occurring in the battery module 300.

One or more second upper protrusions 3122 may be on the second case 312. In the embodiment illustrated in FIGS. 4 and 6, a plurality of second upper protrusions 3122 may be on the upper surface of the second case 312. The second upper protrusions 3122 may be spaced apart from the first upper protrusions 3121. The second upper protrusion 3122 may extend into the substrate 400 after passing through the second film 350 and the first fire prevention sheet 360. The second upper protrusion 3122 may fix the second film 350, the first fire prevention sheet 360, and the substrate 400 on the second case 312. In one or more embodiments, the second upper protrusion 3122 may have a cylindrical shape. The plurality of second upper protrusions 3122 may in a center portion (or substantially a center portion) of the second case 312. In the embodiment illustrated in FIG. 6, two second upper protrusions 3122 may be on an inner portion of the second case 312 in a width direction (e.g., the Y-axis direction in FIG. 6) with respect to the first upper protrusion 3121. However, the number of second upper protrusions 3122 is not limited to two, and the number of first upper protrusions 3121 may vary depending, for example, on the size and shape of the second case 312, the second film 350, the first fire prevention sheet 360, and the substrate 400.

An upper portion of at least some of the plurality of first upper protrusions 3121 and an upper portion of at least some of the plurality of second upper protrusions 3122 may extend into the substrate 400 to support the substrate 400 and separate or space the substrate 400 apart from the upper surface of the first fire prevention sheet 360.

Each of the insertion holes 3123 is a portion in which the battery cell C is accommodated, and the insertion hole 3123 may have a circular shape corresponding to the shape of the battery cell C. The insertion hole 3123 of the second case 312 may correspond to an insertion hole of the first case 311, and may define, together with the insertion hole of the first case 311, a space in which one of the battery cells C is accommodated. The number of insertion holes 3123 may be equal to the number of battery cells C.

The first fastening hole 3124 and the second fastening hole 3125 may each be connected to the bus bar 320. In the embodiment illustrated in FIG. 6, the first fastening hole 3124 and the second fastening hole 3125 may be connected to a first bus bar 321 and a second bus bar 322, respectively, through a fastening member F. One or more first fastening holes 3124 and one or more second fastening holes 3125 may be in the upper surface of the second case 312, and may be portions where the bus bar 320 and the cell tab 330 are connected to each other through the fastening member F. In the embodiment illustrated in FIG. 6, one first fastening hole 3124 may be on each of a pair of long side portions of the second case 312, and a plurality of second fastening holes 3125 (e.g., three) may be on one of the long side portions of the second case 312. One first fastening hole 3124 may be connected to the first bus bar 321, and the other first fastening hole 3124 and the remaining plurality of second fastening holes 3125 may be connected to the second bus bar 322.

The bus bar 320 may include a conductive material such as metal and may be electrically connected to the cell tab 330. The bus bar 320 may include a first bus bar 321 and a second bus bar 322. The first bus bar 321 and the second bus bar 322 may each be electrically connected to different cell tabs 330. The bus bar 320 may be connected to the substrate 400, etc., and may electrically connect the plurality of battery cells C and the substrate 400 to each other.

The cell tabs 330 may electrically connect the plurality of battery cells C to each other. In one or more embodiments, the cell tabs 330 may be in an upper portion and a lower portion of the battery module 300, respectively, and may be connected to the electrodes of the battery cells C exposed through the bottom surface and the upper surface of the first case 311 and the second case 312. A plurality of cell tabs 330 may be included in each battery module 300. In the embodiment illustrated in FIG. 5, the cell tabs 330 may include a plurality of first cell tabs 331 on a bottom surface of the first case 311 and a plurality of second cell tabs 332 on the upper surface of the second case 312. Each first cell tab 331 may be connected to the lower portion of the plurality of battery cells C and electrically connected to the plurality of battery cells C, and may be connected to the bus bar 320. Each second cell tab 332 may be connected to the upper portion of the plurality of battery cells C, electrically connected to the plurality of battery cells C, and connected to the bus bar 320.

The first film 340 and the second film 350 are components configured to insulate the battery module 300 and may be in a lower portion and an upper portion of the battery module 300, respectively. In the embodiment illustrated in FIG. 5, the first film 340 may be under the first case 311, and the second film 350 may be on (e.g., above) the second case 312. The first film 340 may cover the bottom surface of the first case 311 and the second film 350 may cover the upper surface of the second case 312. The first film 340 and the second film 350 may cover the first cell tab 331 and the second cell tab 332, respectively, so that the electrodes of the battery cells C do not contact the battery module 300 or other components of the battery pack 10. In one or more embodiments, the first film 340 and the second film 350 may have a thin flat plate shape. In one or more embodiments, the first film 340 and the second film 350 may each have a surface coated with adhesive (e.g., acrylic adhesive), each surface facing the first case 311 and the second case 312, respectively, and the opposite surfaces thereof may include an insulating tape including an insulating material such as propylene, polyester, or polyimide. In one or more embodiments, the first film 340 and the second film 350 may have a relatively smaller thickness than at least some other components of the battery module 300 (e.g., the case 310, the bus bar 320, the cell tab 330, the first fire prevention sheet 360, the first spacer 370, the second fire prevention sheet 380, and the second spacer 390), and the thickness of the first film 340 and the second film 350 may be negligible compared to the thicknesses of these other components of the battery module 300. In the embodiment illustrated in FIG. 8, the distance L3 between an upper surface of the second film 350 and the first fire prevention sheet 360 may be substantially equal to a distance between the upper surface of the second case 312 and the first fire prevention sheet 360, and these two distances may be used in the present specification with substantially the same meaning. In the embodiment illustrated in FIG. 8, the distance L4 between the bottom surface of the first film 340 and the second fire prevention sheet 380 may be substantially equal to a distance between the bottom surface of the first case 311 and the second fire prevention sheet 380, and these two distances may be used in the present specification with substantially the same meaning.

The first fire prevention sheet 360 may be in the upper portion of the battery module 300 and may be configured to prevent (or at least mitigate) the spread of flames generated by the battery module 300. In one or more embodiments, the first fire prevention sheet 360 may include a fire extinguishing agent. In response to a flame occurring in the battery cell C, a portion of the first fire prevention sheet 360 may be configured to be torn or ruptured due to heat and pressure and the fire extinguishing agent may be sprayed into the battery cell C. The first fire prevention sheet 360 may include a flame-retardant material and may be configured to prevent (or at least mitigate) flames from spreading to other components of the battery pack 10, such as the substrate 400. In one or more embodiments, the first fire prevention sheet 360 may include ceramic paper, mica, or aerogel. The first fire prevention sheet 360 may be on the second film 350 and cover the battery module 300. The first fire prevention sheet 360 may cover three upper sides of the case 310. In one or more embodiments, the first fire prevention sheet 360 may wrap the upper surface of the case 310 (e.g., the upper surface of the second case 312) and two of a plurality of side surfaces of the case 310, which are connected to the upper surface of the case 310 (e.g., two side surfaces corresponding to the long side portions of the second case 312).

The battery pack 10 may include a plurality of first fire prevention sheets 360. In one or more embodiments, the first fire prevention sheet 360 may include the same number of first fire prevention sheets 360 as the number of the plurality of battery modules 300, and the plurality of first fire prevention sheets 360 may respectively correspond to the plurality of battery modules 300 (e.g., one first fire prevention sheet 360 for each battery module 300). Therefore, by reducing the size and weight of the first fire prevention sheet 360 included in each battery module 300, sagging and damage to the first fire prevention sheet 360 may be prevented (or at least mitigated against). Different first fire prevention sheets 360 respectively corresponding to the battery modules 300 may be connected through the second spacer 390.

The first fire prevention sheet 360 may be spaced apart from the case 310 and/or the second film 350. In the embodiment illustrated in FIG. 8, one or more first spacers 370 may be formed on the case 310 and/or the second film 350, and the upper surface of the case 310 and/or the second film 350 and the first fire prevention sheet 360 may be spaced apart from each other by the first spacer 370 by a gap having the distance L3. Therefore, gas generated from the battery cell C may be easily discharged. By separating the first fire prevention sheet 360 and the second film 350 apart from each other, the fire extinguishing agent included in the first fire prevention sheet 360 may be easily sprayed over a relatively wide area.

The first fire prevention sheet 360 may include a first body portion 3601 and a first edge portion 3602. The first body portion 3601 may be supported by the first spacer 370 and may have a larger area than the case 310. The first body portion 3601 may be attached to the upper surface of the second case 312, and the first body portion 3601 may cover the plurality of second cell tabs 332. The first edge portion 3602 may extend downward from an edge or edges of the first body portion 3601. In one or more embodiments, the first edge portion 3602 may correspond to one or both of the long side portions of the first body portion 3601. As illustrated in FIG. 3, the first edge portion 3602 may extend downward from a pair of long side portions of the first body portion 3601 and surround at least a portion of the upper portion of the case 310. The first edge portion 3602 may prevent (or at least mitigate) flames from spreading in a lateral direction (e.g., the Y-axis direction in FIG. 3).

In the embodiment illustrated in FIG. 3, the first edge portion 3602 may not be on either of the short side portions of the first body portion 3601. The first edge portion 3602 may be formed on the pair of long side portions of the first body portion 3601 and may not be formed on a pair of short side portions thereof. As illustrated in FIG. 3, in a longitudinal direction of the battery module 300 (e.g., X-axis direction in FIG. 3), a front surface and a rear surface of the battery module 300 or the case 310 may not be covered by the first fire prevention sheet 360. In one or more embodiments, the first fire prevention sheet 360 may cover three sides of the battery module 300 or the case 310 (e.g., the second case 312). In one or more embodiments, short side portions of the case 310 may not be covered by the first fire prevention sheet 360. Therefore, the first fire prevention sheet 360 may prevent (or at least mitigate) the spread of flames generated from the long side portion of the battery module 300 and allow a small amount of gas to be easily discharged from the short side portion of the battery module 300. Additionally, the flow of gas may be controlled such that the gas generated in the battery module 300 is discharged to the short side portion of the battery module 300.

A lower end of the first edge portion 3602 may be above a center of the case 310 in a height direction and below an upper end of the case 310. In one or more embodiments, a lower end of the first edge portion 3602 may be above a connection portion between the first case 311 and the second case 312, and may be below an upper end of the second case 312. If the first edge portion 3602 extends to the connection portion between the first case 311 and the second case 312, the area covered by the first edge portion 3602 becomes too wide, causing an excessively high internal pressure of the battery module 300 in response to a flame occurring in the battery module 300. In an embodiment in which the first edge portion 3602 is above the upper end of the second case 312, the effect of preventing (or at least mitigating) flame spread from the long side portion of the battery module 300 may decrease. An inner side surface of the first edge portion 3602 may be spaced apart from the side surface of the case 310.

The first fire prevention sheet 360 may include a first sheet hole 361, a second sheet hole 362, and a third sheet hole 363.

As illustrated in FIG. 7, a plurality of first sheet holes 361, second sheet holes 362, and third sheet holes 363 may each be in the first fire prevention sheet 360, and may be portions connected to the case 310, the bus bar 320, and the substrate 400. In one or more embodiments, the plurality of first sheet holes 361 may be in the first fire prevention sheet 360 to correspond to the first upper protrusions 3121 of the second case 312, and the plurality of second sheet holes 362 may be in the first fire prevention sheet 360 to correspond to the second upper protrusions 3122 of the second case 312. The third sheet holes 363 are configured to fasten the bus bar 320 to the second case 312. In one or more embodiments, the third sheet holes 363 may correspond to the first fastening holes 3124 to expose the first fastening holes 3124.

One or more first spacers 370 may be included in the battery module 300 and separate the first fire prevention sheet 360 and the second film 350 apart from each other. The plurality of first spacers 370 may be on the upper surface of the second film 350, and an upper surface of the first spacers 370 may be in contact with a bottom surface of the first fire prevention sheet 360. The first spacer(s) 370 may have a lower height than both the first upper protrusion 3121 and the second upper protrusion 3122, and may separate the upper surface of the second film 350 and the bottom surface of the first fire prevention sheet 360 apart from each other by the gap having the distance L3, thereby allowing gas generated from the battery cell C to be easily discharged. A chemical liquid may be sprayed from the first fire prevention sheet 360 toward the upper surface of the battery cell C where a fire occurred. Because the battery pack 10 includes the first spacer 370, the first fire prevention sheet 360 and the second film 350 may be spaced apart from each other without forming a separate injection molding on the battery module 300 and the housing 100 or the cover 200 or without including an additional holder.

The first spacer 370 may not overlap other components of the second case 312. In the embodiment illustrated in FIG. 6, the first spacer 370 may not overlap with the first upper protrusion 3121, the second upper protrusion 3122, the insertion hole 3123, the first fastening hole 3124, or the second fastening hole 3125. The first spacer 370 may not overlap the insertion hole 3123, into which the battery cell C is inserted, such that the first spacer 370 is configured not to be damaged by gas and heat generated from the battery cell C. The first spacer 370 may be on the second film 350 and adjacent to an edge of the battery module 300 and spaced inward apart from the edge of the second film 350. Therefore, the edges and center of the first fire prevention sheet 360 supported by the first spacer 370 may not sag downward.

The plurality of first spacers 370 may be included in each battery module 300. The plurality of first spacers 370 may be along the edge of the case 310. The plurality of first spacers 370 may be adjacent to the edge of the case 310 but may be spaced inwards from the edge of the case 310. In one or more embodiments, the plurality of first spacers 370 may be adjacent to the long side portion and the short side portion of the second case 312, but spaced apart from the long side and short side portion of the second case 312. In the embodiment illustrated in FIG. 6, one battery module 300 may include four first spacers 370. However, the number of first spacers 370 is not limited to four, and the number of first spacers 370 may vary depending, for example, on the shape, size, weight, etc. of the first fire prevention sheet 360. The first spacer 370 may include a flame-retardant material. In one or more embodiments, the first spacer 370 may be formed by stacking a plurality of flame-retardant materials. In one or more embodiments, the first spacer 370 may be formed by stacking a plurality of Poron TM tapes (e.g., a plurality of microcellular urethane or polyurethane sheets).

The second fire prevention sheet 380 may be in the lower portion of the battery module 300 and prevent (or at least mitigate) flames generated from the battery module 300 from spreading. In one or more embodiments, the second fire prevention sheet 380 may include a fire extinguishing agent, and in response to a flame occurring in one of the battery cells C, a portion of the second fire prevention sheet 380 may be configured to be torn or ruptured due to heat and pressure and the fire extinguishing agent may be sprayed into the battery cell C. The second fire prevention sheet 380 may include a flame-retardant material to prevent (or at least mitigate) flames from spreading to other components of the battery pack 10, such as the substrate 400. In one or more embodiments, the second fire prevention sheet 380 may include ceramic paper, mica, or aerogel. The second fire prevention sheet 380 may be below the first film 340 to cover the lower portion of the battery module 300. The battery pack 10 may include one second fire prevention sheet 380. In one or more embodiments, the second fire prevention sheet 380 may be on the bottom surface of the housing 100 to cover the entire bottom surface of the plurality of battery modules 300. The second fire prevention sheet 380 may cover the three lower sides of the case 310. In one or more embodiments, the second fire prevention sheet 380 may wrap the bottom surface of the case 310 (e.g., the bottom surface of the first case 311) and two of the plurality of sides of the case 310, which are connected to the bottom surface of the case 310 (e.g., two side surfaces corresponding to the long side portions of the first case 311).

The second fire prevention sheet 380 may be spaced apart from the case 310 and/or the first film 340. In the embodiment illustrated in FIG. 8, the case protrusion 3111 of the first case 311 may extend into the housing protrusion 110 of the housing 100, or the housing protrusion 110 may extend into the case protrusion 3111, and the first film 340 and the second fire prevention sheet 380 may be spaced apart from each other by the distance L4. Thus, gas generated from the battery cell C may be easily discharged. By separating the second fire prevention sheet 380 and the first film 340 apart from each other, the fire extinguishing agent included in the second fire prevention sheet 380 may be easily sprayed over a relatively wide area.

The second fire prevention sheet 380 may include a second body portion 3801 and a second edge portion 3802. The second body portion 3801 may be attached to the bottom surface of the first case 311 and may have a larger area than the case 310. In one or more embodiments, the second body portion 3801 may cover the plurality of first cell tabs 331. The second edge portion 3802 may extend upward from the edge or edges of the second body portion 3801. In one or more embodiments, the second edge portion 3802 may correspond to long side portions of the second body portion 3801. As illustrated in FIG. 3, the second edge portion 3802 may extend upward from a pair of long side portions of the second body portion 3801 and surround at least a portion of the lower portion of the case 310. The second edge portion 3802 may be configured to prevent (or at least mitigate) flames from spreading in the lateral direction (e.g., the Y-axis direction in FIG. 3).

In the embodiment illustrated in FIG. 3, the second edge portion 3802 may not be on the short side portions of the second body portion 3801. The second edge portion 3802 may be on the pair of long side portions of the second body portion 3801 and may not be on the pair of short side portions of the second body portion 3801. As illustrated in FIG. 3, in the longitudinal direction of the battery module 300 (e.g., X-axis direction of FIG. 3), the front surface and the rear surface of the battery module 300 or the case 310 may not be covered by the second fire prevention sheet 380. The second fire prevention sheet 380 may cover three sides of the battery module 300 or the case 310 (e.g., the first case 311). Short side portions of the case 310 may not be covered by the second fire prevention sheet 380. Thus, the second fire prevention sheet 380 may prevent (or at least mitigate) the spread of flames generated from the long side portion of the battery module 300 and allow a small amount of gas to be easily discharged from the short side portions of the battery module 300. Additionally, the flow of gas may be controlled such that the gas generated in the battery module 300 is discharged to the short side portions of the battery module 300.

A lower end of the second edge portion 3802 may be below a center of the case 310 in a height direction and above a lower end of the case 310. In one or more embodiments, the lower end of the second edge portion 3802 may be below the connecting portion between the first case 311 and the second case 312 and may be above the lower end of the first case 311. If the second edge portion 3802 extends to the connection portion between the first case 311 and the second case 312, the area covered by the second edge portion 3802 becomes too wide, causing an excessively high internal pressure of the battery module 300 if a flame occurs in the battery module 300. In an embodiment in which the second edge portion 3802 is below the lower end of the first case 311, the effect of preventing (or at least mitigating) the spread of a flame from the long side portion of the battery module 300 may decrease. An inner side surface of the second edge portion 3802 may be spaced apart from the side surface of the case 310.

The second spacer 390 may connect or space apart a plurality of first fire prevention sheets 360 included in different battery modules 300 to/from each other. In the embodiment illustrated in FIG. 7, the second spacer 390 may be on the long side portions (e.g., the first edge portion 3602) of each first fire prevention sheet 360 included in different battery modules 300, and may connect each first fire prevention sheet 360 to each other. The second spacer 390 may have both ends spaced inward relative to both ends of the first fire prevention sheet 360 in a longitudinal direction (e.g., an X-axis direction in FIG. 7) (e.g., second spacer 390 may have a shorter length than the first fire prevention sheets 360 in the X-axis direction). The second spacer 390 may have a width L1 (e.g., a length in the Y-axis direction of FIG. 7) and a length L2 (e.g., a length in the X-axis direction of FIG. 7). The width L1 may correspond to the separation distance between adjacent first fire prevention sheets 360. The length L2 may be less than a length of the first fire prevention sheet 360. In one or more embodiments, the second spacer 390 may include a flame-retardant material. In one or more embodiments, the second spacer 390 may include the same material as that of the first film 340 and/or the second film 350.

The substrate 400 may be electrically connected to the battery module 300 and may be configured to detect a current state of the battery module 300, such as voltage and temperature, and to control the battery module 300. In one or more embodiments, the substrate 400 may include a battery monitoring system (BMS). The substrate 400 may be connected to a plurality of battery cells C through the bus bar 320. The substrate 400 may be configured to detect a voltage or temperature of the plurality of battery cells C and to control the battery module 300 to prevent over-voltage, over-current, and/or over-discharge of the battery module 300. The substrate 400 may include a plurality of circuits and components. The substrate 400 may be a printed circuit board (PCB).

The substrate 400 may be on the battery module 300. In one or more embodiments, as illustrated in FIGS. 3 and 4, the substrate 400 may be on the first fire prevention sheet 360. The substrate 400 may be spaced apart upward in a height direction (e.g., the Z-axis direction in FIG. 3) from the first fire prevention sheet 360 without contacting the first fire prevention sheet 360. Therefore, heat generated in the battery module 300 may be prevented (or at least mitigated) from being directly transferred to the substrate 400. The substrate 400 may be supported on the case 310. In one or more embodiments, the substrate 400 may be supported on the first upper protrusion 3121 and the second upper protrusion 3122 of the second case 312. The first upper protrusion 3121 and the second upper protrusion 3122 may separate the substrate 400 apart upward from the first fire prevention sheet 360 and extend into the substrate 400.

Although the present disclosure has been described with reference to the embodiments illustrated in the drawings, these are merely examples. Those skilled in the art may fully understand that various modifications and equivalent other embodiments may be made from the embodiments. Therefore, the true technical protection scope of the present disclosure should be determined based on the attached claims.

According to the battery pack according to the embodiments, a fire may be quickly extinguished and the spread of fire may be prevented (or at least mitigated) without forming an additional injection molding or applying additional components to other components of the battery pack. According to the battery pack according to the embodiments, sagging of a sheet for fire extinguishing and fire prevention of a battery module may be prevented (or at least mitigated).

However, the effects that may be achieved through the present disclosure are not limited to the above-described effects, and other technical effects not mentioned herein may be clearly understood by those skilled in the art from the description of the present disclosure described below.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack (10) comprising:
a housing (100); and
a plurality of battery modules (30, 300) in the housing (100),
wherein each of the plurality of battery modules (30, 300) comprises:
a plurality of battery cells;
a case (310) accommodating the plurality of battery cells;
a first fire prevention sheet (360) on the case (310); and
a first spacer (370) on the case (310) and configured to separate the first fire prevention sheet (360) from an upper surface of the case (310).

2. The battery pack (10) as claimed in claim 1, wherein the first fire prevention sheet (360) comprises a plurality of first fire prevention sheets (360),
wherein the plurality of battery modules (30, 300) further comprises a second spacer (390) configured to connect the plurality of first fire prevention sheets (360) to each other, and
wherein the plurality of first fire prevention sheets (360) is spaced apart from each other.

3. The battery pack (10) as claimed in claim 2, wherein each of the plurality of first fire prevention sheets (360) corresponds to each of the plurality of battery modules (30, 300), and/or wherein the second spacer (390) comprises a flame-retardant material, and wherein both ends of the second spacer (390) in a longitudinal direction are spaced inward relative to both ends of the first fire prevention sheet (360).

4. The battery pack (10) as claimed in any of the preceding claims, wherein the first spacer (370) comprises a plurality of first spacers (370), and
wherein the plurality of first spacers (370) is disposed along an edge of the case (310).

5. The battery pack (10) as claimed in claim 4, wherein the plurality of first spacers (370) is adjacent to an edge of the case (310) and are spaced apart inwards from the edge.

6. The battery pack (10) as claimed in any of the preceding claims, wherein the first spacer (370) comprises a flame-retardant material comprising a plurality of stacked layers, and wherein an upper surface of the first spacer (370) is in contact with a bottom surface of the first fire prevention sheet (360), and/or
wherein the case (310) comprises:
a first case (311); and
a second case (312) connected to the first case (311), the first case (311) and the second case (312) accommodating the plurality of battery cells,
wherein the second case (312) comprises a protrusion on an upper surface of the second case (312),
wherein the protrusion supports the first fire prevention sheet (360), and
wherein the first spacer (370) does not overlap the protrusion.

7. The battery pack (10) as claimed in claim 6, further comprising a substrate (400) on the plurality of battery modules (30, 300) and electrically connected to the plurality of battery modules (30, 300), and
wherein the protrusion separates the substrate (400) from the upper surface of the second case (312), and/or
wherein the protrusion comprises:
a plurality of first upper protrusions (3121) on the upper surface of the second case (312); and
a plurality of second upper protrusions (3122) on the upper surface of the second case (312) and spaced apart from the plurality of first upper protrusions (3121),
wherein at least some of the plurality of first upper protrusions (3121) and at least some of the plurality of second upper protrusions (3122) are inserted into the substrate (400) and configured to support the substrate (400) to separate the substrate (400) from the upper surface of the first fire prevention sheet (360).

8. The battery pack (10) as claimed in any of the preceding claims, wherein each of the plurality of battery modules (30, 300) comprises:
a first film (340) covering a bottom surface of the first case (311); and
a second film (350) covering the upper surface of the second case (312),
wherein a plurality of first spacers (370) is on the first film (340).

9. The battery pack (10) as claimed in claim 8, wherein the second film (350) is spaced apart from a bottom surface of the housing (100).

10. The battery pack (10) as claimed in any of the preceding claims, wherein the first fire prevention sheet (360) comprises a flame-retardant material or a fire extinguishing agent, and wherein the first fire prevention sheet (360) extends around three sides of an upper portion of the case (310), and/or
wherein the first fire prevention sheet (360) comprises:
a first body portion (3601) covering the upper surface of the case (310); and
two first edge portions (3602) extending downward from two long side portions of the first body portion (3601),
wherein short side portions of the case (310) are not covered by the first fire prevention sheet (360).

11. The battery pack (10) as claimed in claim 10, wherein a lower end of each of the two first edge portions (3602) is above a center of the case (310) in a height direction and below an upper end of the case (310).

12. The battery pack (10) as claimed in any of the preceding claims, wherein the case (310) comprises a case protrusion (3111) protruding downward from a bottom surface of the case (310), and
wherein the housing (100) has a bottom surface spaced apart from the bottom surface of the case (310) by the case protrusion (3111).

13. The battery pack (10) as claimed in claim 12, wherein the housing (100) comprises housing protrusions (110) on the bottom surface of the housing (100), and
wherein the housing protrusion is in the case protrusion (3111) or the case (310) protrusion is in the housing (100) protrusion.

14. The battery pack (10) as claimed in any of the preceding claims, wherein each of the plurality of battery modules (30, 300) further comprises a second fire prevention sheet (380) on a bottom surface of the housing (100) and covering all bottom surfaces of the plurality of battery modules (30, 300).

15. The battery pack (10) as claimed in claim 14, wherein the second fire prevention sheet (380) comprises a flame-retardant material or a fire extinguishing agent, and
wherein the second fire prevention sheet (380) extends around three sides of a lower portion of the case (310), and/or
wherein the second fire prevention sheet (380) comprises:
a second body portion (3801) covering a bottom surface of the case (310); and
two second edge portions (3802) extending upward from two long side portions of the second body portion (3801),
wherein short side portions of the case (310) are not covered by the first fire prevention sheet (360).
